# EUROPEAN PATENT APPLICATION

(11) **EP 4 137 318 A1**
(43) Date of publication of application: **22.02.2023**
(21) Application number: 21787553.3
(22) Date of filing: 13.04.2021
(51) Int. Cl.: B32B 27/18, B65D 65/40, C09D 201/08, C09D 7/61, C09D 7/65

(54) **COATING LIQUID FOR PRODUCTION OF GAS BARRIER MULTILAYER BODY**

(30) Priority: 17.04.2020 JP 2020073993
(71) Applicant: TOPPAN INC., Tokyo 110-0016 (JP)
(72) Inventor: MAEDA, Masaki, Tokyo 110-0016 (JP); OKANO, Tetsuya, Tokyo 110-0016 (JP)
(74) Representative: Hoffmann Eitle
(86) International application number: PCT/JP2021/015292
(87) International publication number: WO 2021/210571

(57) **Abstract**

Deterioration of gas barrier properties due to sedimentation of aggregates in a coating liquid is minimized. A coating liquid for producing a gas barrier laminate contains a carboxy group-containing polymer (A), polyvalent metal-containing particles (B), a high molecular weight dispersant (C) with an acidic group, and an organic solvent (D), and has a pH in a range of 4 to 6 at 25°C.

## Description

### [Technical Field]

The present invention relates to gas barrier laminates.

### [Background Art]

If articles, such as foods, drugs, cosmetics, agrichemicals, and industrial products, are stored for a significant period of time, their qualities may be deteriorated due to oxygen. Therefore, films or sheets having oxygen gas barrier properties have been used as packaging materials for these articles.

As such packaging materials, materials including an aluminum foil as a gas barrier layer have been frequently used. However, if packaging materials including an aluminum foil are used, the contents cannot be seen and metal detectors cannot be used. Therefore, development of packaging materials having good gas barrier properties and transparency has been sought in the fields of foods and pharmaceuticals in particular.

In order to meet this trend, there have been used gas barrier laminates including a substrate on which a polyvinylidene chloride (PVDC) layer is provided by applying a coating liquid containing PVDC thereto. Layers made of PVDC are transparent and have gas barrier properties.

However, PVDC may generate dioxins during incineration. Therefore, there is a need to shift from PVDC to non-chlorine materials. In order to meet this need, for example, use of polyvinyl alcohol (PVA) polymers in place of PVDC has been proposed.

Layers made of PVA polymers become highly dense due to hydrogen bonding of the hydroxyl group, and exhibit high gas barrier properties in low humidity atmospheres. However, layers made of PVA polymers suffer from significant deterioration in gas barrier properties in high humidity atmospheres due to absorbing moisture and thereby loosening the hydrogen bonding. For this reason, gas barrier laminates using layers of PVA polymers as gas barrier layers cannot be used in many cases as packaging materials for foods and the like containing a large amount of moisture, and therefore, use of these laminates has been limited to packaging materials and the like for dry substances.

For the purpose of further improving gas barrier properties, it has been proposed to add an inorganic lamellar compound to PVA polymers (see PTL 1). However, since addition of an inorganic lamellar compound does not necessarily improve water resistance of PVA polymers, the issue of deteriorating gas barrier properties in high humidity atmospheres still remains.

In order to improve gas barrier properties in high humidity atmospheres, there has been proposed a method of producing a gas barrier laminate by applying a coating liquid, which contains a PVA polymer and a polymer that can form a cross-linked structure with the PVA polymer, onto a substrate and heat treating the coated substrate (PTLs 2 to 6).

However, in order to achieve sufficiently high gas barrier properties with these techniques, heat treatment after application of the coating liquid is required to be performed at a high temperature, e.g., 150°C or higher, to form a cross-linked structure. Depending on the material of the substrate or, for example, if the material of the substrate is a polyolefin, such as polypropylene (OPP) or polyethylene (PE), such heat treatment may significantly damage the substrate. Therefore, there is a need for gas barrier laminates which can be produced under milder conditions.

As a method of forming a gas barrier layer, there has also been proposed a method including forming a layer containing a polycarboxylic acid polymer, such as a polymer of a polyacrylic acid, and ion-crosslinking the polycarboxylic acid polymer with polyvalent metal ions (see PTLs 7 to 8).

This method does not require high temperature heat treatment as in the methods described in PTLs 2 to 6. Therefore, polyolefins can be used for substrates. Furthermore, the obtained gas barrier layers have good gas barrier properties even in high humidity atmospheres. Therefore, gas barrier laminates including such gas barrier layers can be applied to usages in which heat sterilization treatment, such as boiling or retorting, is performed.

However, if a polycarboxylic acid polymer and a polyvalent metal compound are mixed into a coating liquid together, they may react with each other in the coating liquid and may easily cause sedimentation. If sedimentation occurs in the liquid, a uniform film cannot be formed. Therefore, when forming a gas barrier layer using this method, a layer containing a polycarboxylic acid polymer and a layer containing a polyvalent metal compound are formed separately, or an aqueous solution of polyvalent metal salt is brought into contact with a layer containing a polycarboxylic acid polymer. Therefore, this method raises an issue of requiring a greater number of steps.

There has been another proposal in which the water content is 1,000 ppm or less in a coating liquid containing a polycarboxylic acid polymer, polyvalent metal compound particles, a surfactant, and an organic solvent (see PTL 9). This coating liquid, in which the water content is 1,000 ppm or less, can reduce reaction between a polycarboxylic acid polymer and a polyvalent metal compound.

### [Citation List]

### [Patent Literature]

PTL 1: JP H6-093133 A
PTL 2: JP 2000-289154 A
PTL 3: JP 2000-336195 A
PTL 4: JP 2001-323204 A
PTL 5: JP 2002-020677 A
PTL 6: JP 2002-241671 A
PTL 7: WO2003/091317 A
PTL 8: WO2005/053954 A
PTL 9: JP 2005-126528 A

### [Summary of the Invention]

The coating liquid described in PTL 9 does not undergo precipitation due to reaction between the polycarboxylic acid polymer and the polyvalent metal compound as long as control is performed to prevent entry of moisture into the liquid. However, the present inventors have found that sedimentation of aggregates may be caused due to any other reasons, which may consequently make it difficult to produce a gas barrier laminate having high gas barrier properties.

In light of these circumstances, the present invention aims to prevent deterioration of gas barrier properties, which is due to sedimentation of aggregates in a coating liquid.

According to a first aspect of the present invention, there is provided a coating liquid for producing a gas barrier laminate, containing a carboxy group-containing polymer (A), polyvalent metal-containing particles (B), a high molecular weight dispersant (C) with an acidic group, and an organic solvent (D). The coating liquid has a pH in a range of 4 to 6 at 25°C.

According to a second aspect of the present invention, there is provided the coating liquid according to the first aspect. In the coating liquid, the polyvalent metal-containing particles (B) contain polyvalent metal that is bivalent metal.

According to a third aspect of the present invention, there is provided the coating liquid according to the first or second aspect. In the coating liquid, the polyvalent metal-containing particles (B) contain zinc oxide.

According to a fourth aspect of the present invention, there is provided the coating liquid according to any one of the first to third aspects. In the coating liquid, the high molecular weight dispersant (C) contains a polyether phosphate ester.

According to a fifth aspect of the present invention, there is provided the coating liquid according to any one of the first to fourth aspects. In the coating liquid, when an amount of the polyvalent metal-containing particles (B) is 100 parts by mass, an amount of the high molecular weight dispersant (C) is in a range of 1 part by mass to 30 parts by mass.

According to a sixth aspect of the present invention, there is provided the coating liquid according to any one of the first to fifth aspects. In the coating liquid, the carboxy group-containing polymer (A) has a number average molecular weight in a range of 5,000 to 50,000.

According to a seventh aspect of the present invention, there is provided the coating liquid according to any one of the first to sixth aspects. The coating liquid has a water content of 50,000 ppm or less in terms of mass fraction.

According to an eighth aspect of the present invention, there is provided the coating liquid according to any of the first to seventh aspects. In the coating liquid, a ratio of a product of a mole number (Bt) and a valence of the polyvalent metal contained in the polyvalent metal-containing particles (B), to a mole number (At) of carboxy groups contained in the carboxy group-containing polymer (A) is 0.6 or more.

According to a ninth aspect of the present invention, there is provided the coating liquid according to any of the first to eighth aspects. In the coating liquid, when a first average particle size D1 immediately after production and a second average particle size D2 after the lapse of 8 hours from production under temperature conditions of 25°C are measured, a ratio D2/D1 between the second average particle size D2 and the first average particle size D1 is in a range of 0.8 to 1.3.

According to a tenth aspect of the present invention, there is provided a gas barrier laminate including a cured film of the coating liquid according to any one of the first to ninth aspects as a coating layer.

According to an eleventh aspect of the present invention, there is provided the gas barrier laminate according to the tenth aspect. In the gas barrier laminate, the laminate has a thickness in a range of 0.01 µm to 100 µm and an oxygen permeability of 1,000 cm³/(m²·day ·MPa) or less measured under conditions of 30°C and 70% relative humidity.

According to a twelfth aspect of the present invention, there is provided a packaging material including the gas barrier laminate according to the tenth or eleventh aspect.

According to a thirteenth aspect of the present invention, there is provided a packaging body containing the packaging material according to the twelfth aspect.

According to a fourteenth aspect of the present invention, there is provided a packaged article including the packaging body according to the thirteenth aspect and contents accommodated in the packaging body.

According to a fifteenth aspect of the present invention, there is provided a method of producing a coating liquid for producing a gas barrier laminate, including mixing a polymer solution (I) with a polyvalent metal dispersion liquid (II) to obtain a mixture having a pH in a range of 4 to 6 at 25°C. In the method, the polymer solution (I) contains a carboxy group-containing polymer (A) and an organic solvent (D); and the polyvalent metal dispersion liquid (II) contains polyvalent metal-containing particles (B), a high molecular weight dispersant (C) with an acidic group, and an organic solvent (D).

According to a sixteenth aspect of the present invention, there is provided the production method according to the fifteenth aspect. In the method, the polymer solution (I) has a pH in a range of 3 to 7 at 25°C, and the polyvalent metal dispersion liquid (II) has a pH in a range of 3 to 7 at 25°C.

According to a seventeenth aspect of the present invention, there is provided a method of producing a gas barrier laminate, including producing the coating liquid through the method according to the fifteenth or sixteenth aspect, and forming a coating layer from the coating liquid.

According to an eighteenth aspect of the present invention, there is provided a method of producing a gas barrier laminate, including forming a coating layer from the coating liquid according to any of the first to ninth aspects.

### [Description of the Embodiments]

Some embodiments of the present invention will be described below. Each embodiment described below is a specific version of any of the aspects set forth above.

### <Coating liquid for producing gas barrier laminate>

A coating liquid for producing a gas barrier laminate according to an embodiment of the present invention (also simply termed coating liquid hereinafter) is characterized in that it contains a carboxy group-containing polymer (A), polyvalent metal-containing particles (B), a high molecular weight dispersant (C) with an acidic group, and an organic solvent (D), and that it has a pH in the range of 4 to 6 at 25°C.

### [Carboxy group-containing polymer (A)]

The carboxy group-containing polymer used in the above coating liquid is a polymer having two or more carboxy groups in the molecule and may be referred to as a polycarboxylic acid polymer. The carboxy group-containing polymer may typically be a homopolymer of a carboxy group-containing unsaturated monomer, copolymer of two or more carboxy group-containing unsaturated monomers, copolymer of a carboxy group-containing unsaturated monomer and other polymerizable monomers, or polysaccharide having carboxy groups in the molecule (also termed carboxy group-containing polysaccharide or acidic polysaccharide).

The carboxy groups include not only free carboxy groups, but also acid anhydride groups (specifically, dicarboxylic anhydride groups). In the acid anhydride groups, the rings may be partially open to form carboxy groups. Part of the carboxy groups may be neutralized with alkali. In this case, the degree of neutralization is preferred to be 20% or less.

The degree of neutralization is a value obtained through the following method. Specifically, the carboxy groups can be partially neutralized by adding an alkali (E) to the carboxy-group containing polymer (A). In this case, the degree of neutralization is the ratio of the mole number (Et) of the alkali (E) to the mole number (At) of the carboxy groups contained in the carboxy-group containing polymer (A).

Furthermore, a graft polymer obtained by graft polymerizing a carboxy-group containing unsaturated monomer with a polymer, such as a polyolefin, containing no carboxy groups can also be used as a carboxy group-containing polymer. Also, a polymer obtained by hydrolyzing a polymer with hydrolyzable ester groups, such as alkoxycarbonyl groups (e.g., methoxycarbonyl groups), and converting the ester groups into carboxy groups can be used.

The carboxy group-containing unsaturated monomer is preferred to be an α,β-monoethylenically unsaturated carboxylic acid. Accordingly, the carboxy group-containing polymer may include homopolymers of α,β-monoethylenically unsaturated carboxylic acid, copolymers of two or more α,β-monoethylenically unsaturated carboxylic acids, and copolymers of α,β-monoethylenically unsaturated carboxylic acid and other polymerizable monomers. Other polymerizable monomers may typically be ethylenically unsaturated monomers.

Examples of the α,β-monoethylenically unsaturated carboxylic acid may include unsaturated monocarboxylic acids such as acrylic acid, methacrylic acid, and crotonic acid; unsaturated dicarboxylic acids such as maleic acid, fumaric acid, and itaconic acid; unsaturated dicarboxylic acid anhydrides such as maleic anhydride and itaconic anhydride; and mixtures of two or more of these materials. Of these materials, at least one α,β-monoethylenically unsaturated carboxylic acid selected from the group consisting of acrylic acid, methacrylic acid, crotonic acid, maleic acid, fumaric acid, and itaconic acid is preferred, and at least one α,β-monoethylenically unsaturated carboxylic acid selected from the group consisting of acrylic acid, methacrylic acid, and maleic acid is more preferred.

Examples of other polymerizable monomers, or ethylenically unsaturated monomers in particular, that can be copolymerized with α,β-monoethylenically unsaturated carboxylic acid may include ethylene; α-olefins such as propylene, 1-butene, 1-pentene, 1-hexene, and 1-octene; saturated carboxylic acid vinyl esters such as vinyl acetate; acrylic acid alkyl esters such as methyl acrylate and ethyl acrylate; methacrylic acid alkyl esters such as methyl methacrylate and ethyl methacrylate; chlorine-containing vinyl monomers such as vinyl chloride and vinylidene chloride; fluorine-containing vinyl monomers such as vinyl fluoride and vinylidene fluoride; unsaturated nitriles such as acrylonitrile and methacrylonitrile; aromatic vinyl monomers such as styrene and α-methylstyrene; and itaconic acid alkyl esters. These ethylenically unsaturated monomers can be used singly or in combination of two or more. If the carboxy group-containing polymer is a copolymer of α,β-monoethylenically unsaturated carboxylic acid and a saturated carboxylic acid vinyl ester such as vinyl acetate, this copolymer may be used after being saponified to convert the saturated carboxylic acid vinyl ester units into vinyl alcohol units.

Examples of the carboxy group-containing polysaccharide may include acidic polysaccharides having carboxy groups in the molecule, such as alginic acid, carboxymethyl cellulose, and pectin. These acidic polysaccharides can be used singly or in combination of two or more. Furthermore, these acidic polysaccharides can be used in combination with a (co)polymer of α,β-monoethylenically unsaturated carboxylic acid.

If the carboxy group-containing polymer is a copolymer of α,β-monoethylenically unsaturated carboxylic acid and other ethylenically unsaturated monomers, the ratio of the mole number of the α,β-monoethylenically unsaturated carboxylic acid monomer to the total mole number of the monomers in the copolymer is preferred to be 60 mol% or more, more preferred to be 80 mol% or more, and even more preferred to be 90 mol% or more, from the perspective of gas barrier properties, hot water resistance, and water vapor resistance of the film to be obtained.

The carboxy group-containing polymer is preferred to be a homopolymer or a copolymer obtained by polymerizing only α,β-monoethylenically unsaturated carboxylic acid, because such a homopolymer or a copolymer can easily provide a film having good gas barrier properties, moisture resistance, water resistance, hot water resistance, and water vapor resistance, and exhibiting good gas barrier properties even under high humidity conditions. If the carboxy group-containing polymer is a (co)polymer of only α,β-monoethylenically unsaturated carboxylic acid, preferred specific examples thereof include homopolymers or copolymers obtained by polymerizing at least one α,β-monoethylenically unsaturated carboxylic acid selected from the group consisting of acrylic acid, methacrylic acid, crotonic acid, maleic acid, fumaric acid, and itaconic acid, and mixtures of two or more of these materials. Of these, homopolymers or copolymers of at least one α,β-monoethylenically unsaturated carboxylic acid selected from the group consisting of acrylic acid, methacrylic acid, and maleic acid are more preferred.

As the carboxy group-containing polymer, polyacrylic acid, polymethacrylic acid, polymaleic acid, or a mixture of two or more of these materials is particularly preferred. The monomer for the acidic saccharides is preferred to be alginic acid. Of these, polyacrylic acid is particularly preferred from the perspective of being comparatively easily available and easily providing films having good physical properties.

The carboxy group-containing polymer may be taken, for example, to have a number average molecular weight of 200,000 or less. This number average molecular weight is preferred to be 100,000 or less, more preferred to be 90,000 or less, even more preferred to be 80,000 or less, still more preferred to be 70,000 or less, still more preferred to be 60,000 or less, and most preferred to be 50,000 or less.

If the number average molecular weight is excessively large, the carboxy group-containing polymer may act as a flocculant. Consequently, the coating liquid may entirely turn into a gel, or a precipitate may be produced in the coating liquid. A coating liquid, in which a gel or a precipitate has been produced, cannot be used for forming a coating film, or if it can be used for forming a coating film, it will be significantly difficult to form a coating film having a uniform thickness and composition. Thus, the coating layer obtained from a coating film with a non-uniform thickness and composition will also have a non-uniform thickness and composition, and will accordingly have insufficient in-plane uniformity such as in gas barrier properties or physical properties.

The number average molecular weight of the carboxy group-containing polymer is preferred to be 2,000 or more, more preferred to be 3,000 or more, even more preferred to be 4,000 or more, and most preferred to be 5,000 or more.

If the number average molecular weight of the carboxy group-containing polymer is excessively small, viscosity of the coating liquid may be reduced. Consequently, convection (Marangoni convection) may occur in the coating liquid in the drying process after coating, and it will be significantly difficult to form a coating film with a uniform thickness and composition. Consequently, the coating layer to be obtained may have insufficient in-plane uniformity, and it will be difficult to obtain stable gas barrier properties or physical properties. Furthermore, if the number average molecular weight of the carboxy group-containing polymer is excessively small, the breaking stress of the coating film formed from the coating liquid may be reduced and there will be a high probability of causing cracking in the coating film when it is processed. It would be significantly difficult for a coating film suffering from cracking to exhibit desired gas barrier properties or physical properties.

The number average molecular weight is a value obtained through measurements based on gel permeation chromatography (GPC). In GPC measurements, in general, the number average molecular weight of polymers is measured relative to a polystyrene standard.

### [Polyvalent metal-containing particles (B)]

The polyvalent metal-containing particles used in the above coating liquid are particles containing one or more types of polyvalent metal with a metal ion valence of two or more. The polyvalent metal-containing particles may be particles of polyvalent metal with a metal ion valence of two or more, or may be particles of a compound of polyvalent metal with a metal ion valence of two or more, or may be particles in which these types of particles are mixed.

Specific examples of the polyvalent metal may include, but are not limited to, metals of Group 2A of the short-period periodic table such as beryllium, magnesium, and calcium; transition metals such as titanium, zirconium, chromium, manganese, iron, cobalt, nickel, copper, and zinc; and aluminum.

The polyvalent metal is preferred to be bivalent metal. Also, the polyvalent metal is preferred to form a compound.

Specific examples of the polyvalent metal compound may include, but are not limited to, polyvalent metal oxides, polyvalent metal hydroxides, and polyvalent metal carbonates, and organic or inorganic acid salts of polyvalent metals. Examples of the organic acid salt may include, but are not limited to, acetates, oxalates, citrates, lactates, phosphates, phosphites, hypophosphites, stearates, and monoethylenically unsaturated carboxylates. Examples of the inorganic acid salt may include, but are not limited to, chlorides, sulfates, and nitrates. Alkyl alkoxides of polyvalent metals may also be used as the polyvalent metal compound. These polyvalent metal compounds can be used singly or in combination of two or more.

Of these polyvalent metal compounds, a compound such as of beryllium, magnesium, calcium, copper, cobalt, nickel, zinc, aluminum, or zirconium is preferred, and a bivalent metal compound such as of beryllium, magnesium, calcium, copper, zinc, cobalt, or nickel is more preferred, from the perspective of dispersion stability of the coating liquid and gas barrier properties of the laminate formed from the coating liquid.

Examples of the preferred bivalent metal compound may include, but are not limited to, oxides such as zinc oxide, magnesium oxide, copper oxide, nickel oxide, and cobalt oxide; carbonates such as calcium carbonate; organic acid salts such as calcium lactate, zinc lactate, and calcium acrylate; and alkoxides such as magnesium methoxide.

The polyvalent metal or polyvalent metal compound is used in the form of particles and the particle shape is maintained in the coating liquid. The polyvalent metal-containing particles in the coating liquid are preferred to have an average particle size in the range of 10 nm to 10 µm (or 10,000 nm), more preferred to be in the range of 12 nm to 1 µm (or 1,000 nm), even more preferred to be in the range of 15 nm to 500 nm, and most preferred to be in the range of 15 nm to 50 nm, from the perspective of dispersion stability of the coating liquid and gas barrier properties of the laminate formed from the coating liquid.

If the average particle size of the polyvalent metal-containing particles in the coating liquid is excessively large, the coating layer to be obtained may tend to be insufficient in thickness uniformity, surface flatness, and ion cross-linking reactivity with the carboxy group-containing polymer, and the like. If the average particle size of the polyvalent metal-containing particles is excessively small, ion cross-linking reaction with the carboxy group-containing polymer may progress at an earlier stage. Furthermore, if the particles are ultrafine particles with a particle size of less than 10 nm, it may be difficult to uniformly disperse them in the coating liquid.

In the case of a dry solid sample, the average particle size of the polyvalent metal-containing particles can be measured by measuring and counting the particles using a scanning electron microscope or transmission electron microscope. The average particle size of the polyvalent metal-containing particles in the coating liquid can be measured using a light scattering method [cf. "Engineering system for fine particles", pp. 362-365, Vol. I, Fuji Technosystem (2001)]

The polyvalent metal-containing particles in the coating liquid are in the form of primary particles, secondary particles, or particles in which these particles are mixed; however, in many cases, they are assumed to be present in the form of secondary particles considering the average particle size.

### [High molecular weight dispersant (C)]

The above coating liquid uses a dispersant to enhance dispersion of the polyvalent metal-containing particles. The dispersant used in the coating liquid is a high molecular weight dispersant with an acidic group.

Dispersants are surfactants. Surfactants are compounds having both of hydrophilic and lipophilic groups in the molecule. Surfactants include anionic, cationic, and amphoteric ionic surfactants, and nonionic surfactants. In the above coating liquid, anionic or nonionic surfactants or combinations thereof are used as the high molecular weight dispersant.

Examples of the anionic surfactants may include carboxylic acid type anionic surfactants, sulfonic acid type anionic surfactants, sulfate ester type anionic surfactants, and phosphoric acid ester type anionic surfactants. Examples of the carboxylic acid type anionic surfactants may include aliphatic monocarboxylates, polyoxyethylene alkyl ether carboxylates, N-acyl sarcosinates, and N-acyl glutamates. Examples the sulfonic acid type anionic surfactants may include dialkyl sulfosuccinates, alkane sulfonates, alpha olefin sulfonates, linear alkyl benzene sulfonates, alkyl (branched chain) benzene sulfonates, naphthalene sulfonate-formaldehyde condensates, alkyl naphthalene sulfonates, and N-methyl-N-acyl taurates. Examples of the sulfate ester type anionic surfactants may include alkyl sulfates, polyoxyethylene alkyl ether sulfates, and oil sulfate ester salts. Examples of the phosphoric acid ester type anionic surfactants may include alkyl phosphates, polyoxyethylene alkyl ether phosphates, and polyoxyethylene alkyl phenyl ether phosphates.

Examples of the nonionic surfactants may include ester type nonionic surfactants. Examples of the ester type nonionic surfactants may include glycerin fatty acid esters, sorbitan fatty acid esters, and sucrose fatty acid esters.

Of these surfactants, surfactants such as phosphoric acid esters with a phosphoric acidic group are preferred, and polyether phosphate esters are most preferred.

The high molecular weight dispersant (surfactant) is preferred to have a number average molecular weight of 2,000 or more, more preferably 5,000 or more, and even more preferably 10,000 or more. If the molecular weight of the dispersant is excessively small, it will be difficult to stably disperse the polyvalent metal-containing particles in the coating liquid.

The high molecular weight dispersant (surfactant) is preferred to have a number average molecular weight of 300,000 or less, more preferably 200,000 or less, and even more preferably 150,000 or less. If the molecular weight of the dispersant is excessively large, particles cannot be sufficiently dispersed and thus transparency of the coating film may be impaired.

Dispersants with an acidic group are easy to bond with polyvalent metals. Due to having a high molecular weight, the dispersant used herein has a high ability to stably retain the dispersed state of the polyvalent metal-containing particles. Accordingly, use of a high molecular weight dispersant with an acidic group can achieve a state where the polyvalent metal-containing particles are uniformly dispersed, and the state can be retained for a long period of time.

### [Organic solvent (D)]

The above coating liquid uses an organic solvent as a solvent or a dispersion medium. As the organic solvent, a polar organic solvent that dissolves carboxy group-containing polymers is generally used; however, an organic solvent with no polar group (heteroatoms or atomic group having heteroatoms) may be used in combination with the polar organic solvent.

Examples of the organic solvent preferred to be used may include alcohols such as methanol, ethanol, isopropanol, n-propanol, and n-butanol; and polar organic solvents such as dimethyl sulfoxide, N,N-dimethylacetamide, N,N-dimethylformamide, N-methyl-2-pyrrolidone, tetramethylurea, hexamethylphosphoric acid triamide, and γ-butyrolactone.

Other than the above polar organic solvents, hydrocarbons such as benzene, toluene, xylene, hexane, heptane, and octane; ketones such as acetone and methyl ethyl ketone; halogenated hydrocarbons such as dichloromethane; esters such as methyl acetate; and ethers such as diethyl ether may be used as appropriate. Hydrocarbons, such as benzene, with no polar group are generally used in combination with polar organic solvents.

The coating liquid may contain only an organic solvent as a solvent or a dispersion medium, but may further contain water. With water being contained in the coating liquid, solubility of the carboxy group-containing polymer can be improved, and coating performance of the coating liquid and workability can also be improved. The coating liquid may have a water content of 100 ppm or more, preferably 1,000 ppm or more, more preferably 1,500 ppm or more, and even more preferably 2,000 ppm or more, in terms of mass fraction.

The coating liquid, if it uses a carboxy group-containing polymer whose number average molecular weight is low, is unlikely to cause sedimentation or gelatinization even with the water content that would have caused sedimentation or gelatinization in a coating liquid using a carboxy group-containing polymer whose number average molecular weight is high. The coating liquid is preferred to have a water content of 50,000 ppm or less, more preferably 30,000 ppm or less, even more preferably 10,000 ppm or less, and most preferably 5,000 ppm or less, in terms of mass fraction.

### [Composition]

The above coating liquid, which contains the carboxy group-containing polymer (A), polyvalent metal-containing particles (B), high molecular weight dispersant (C), and organic solvent (D), is a dispersion liquid, with the polyvalent metal-containing particles dispersed therein.

The ratio of the product of the mole number (Bt) and the valence of the polyvalent metal contained in the polyvalent metal-containing particles (B), to the mole number (At) of the carboxy groups contained in the carboxy group-containing polymer (A) (also termed equivalent ratio hereinafter) is preferred to be 0.6 or more. The ratio is more preferred to be 0.8 or more, and most preferred to be 1.0 or more. The upper limit of this ratio is usually 10.0, but is preferred to be 2.0. If this ratio is excessively small, the laminate, in which the coating layer is formed from the coating liquid, may be deteriorated in various properties such as gas barrier properties, hot water resistance, and water vapor resistance.

The equivalent ratio can be calculated as follows, for example. The following description will be given, taking an example in which the carboxy group-containing polymer is polyacrylic acid and the polyvalent metal compound is magnesium oxide.

Polyacrylic acid has a molecular weight of 72 in a monomer unit, and has one carboxy group per monomer molecule. Therefore, the amount of carboxy groups in 100 g of polyacrylic acid is 1.39 mol. The equivalent ratio being 1.0 in the coating liquid containing 100 g of polyacrylic acid means that the coating liquid contains magnesium oxide with an amount that can neutralize 1.39 mol of carboxy groups. Accordingly, in order to achieve the equivalent ratio of 0.6 in the coating liquid containing 100 g of polyacrylic acid, magnesium oxide with an amount that can neutralize 0.834 mol of carboxy groups may need to be added to the coating liquid. The valence of magnesium is 2, while the molecular weight of magnesium oxide is 40. Accordingly, in order to achieve the equivalent ratio of 0.6 in the coating liquid containing 100 g of polyacrylic acid, 16.68 g (0.417 mol) of magnesium oxide may need to be added to the coating liquid.

The organic solvent is used with an amount that is sufficient for the carboxy group-containing polymer to uniformly dissolve therein and for the polyvalent metal-containing particles to uniformly disperse therein. Accordingly, the organic solvent used is one that can dissolve the carboxy group-containing polymer, without substantially dissolving the polyvalent metal compound, but can disperse the latter in the form of particles.

The high molecular weight dispersant is used with an amount sufficient for the polyvalent metal-containing particles to stably disperse. When the amount of the polyvalent metal-containing particles is 100 parts by mass, the amount of the high molecular weight dispersant in the coating liquid is preferred to be in the range of 1 part by mass to 30 parts by mass, more preferred to be 5 to 25 parts by weight, and even more preferred to be 10 parts by mass to 20 parts by mass.

If the amount of the high molecular weight dispersant is excessively small, it may be difficult to disperse the polyvalent metal-containing particles in the coating liquid so that their average particle size would be sufficiently small. Consequently, it would be difficult to obtain a coating liquid in which the polyvalent metal-containing particles are uniformly dispersed and thus it would be difficult to form a coating film having a uniform thickness when the coating liquid is applied to a substrate.

Furthermore, if the amount of the high molecular weight dispersant is excessively small, the polyvalent metal-containing particles are likely to cohere or settle in the coating liquid Therefore, the amount of the polyvalent metal-containing particles contained in the coating film could be greatly different between immediately after starting application of the coating liquid and when the remaining amount of the coating liquid has become low after repeated application. Consequently, gas barrier properties could be greatly different between the gas barrier laminate produced immediately after starting application of the coating liquid and the gas barrier laminate produced when the amount of the remaining coating liquid has become low.

Excessively large amount of high molecular weight dispersant could be a cause of deteriorating dispersion stability of the particles in the coating liquid or deteriorating gas barrier properties of the coating film.

The coating liquid has a pH in the range of 4 to 6 at 25°C. Preferably, the coating liquid has a pH in the range of 4.5 to 6 at 25°C. An excessively low pH can cause sedimentation of aggregates immediately after production of the coating liquid. An excessively high pH can either cause sedimentation of aggregates immediately after production of the coating liquid, or cause sedimentation of aggregates after the lapse of a predetermined time from production of the coating liquid, and therefore, it will be difficult to produce a gas barrier laminate having high gas barrier properties.

### [Method of producing coating liquid]

In order to produce a coating liquid, a polymer solution (I) in which the carboxy group-containing polymer (A) is uniformly dissolved in the organic solvent (D) is prepared. For example, if commercially available polyacrylic acid is used as a starting material, the polyacrylic acid is uniformly dissolved in the organic solvent (D) to prepare a polyacrylic acid solution.

Then, the polyvalent metal-containing particles (B), the high molecular weight dispersant (C), and the organic solvent (D) are mixed with each other and the mixture is subjected to dispersion treatment, as necessary, to prepare a polyvalent metal dispersion liquid (II). The dispersion treatment is performed so that the polyvalent metal-containing particles (B) will have a predetermined average particle size. If the average particle size of the polyvalent metal-containing particles (B) in the mixture is 10 µm or less before dispersion treatment, dispersion treatment may be omitted; however, it is still preferred to perform dispersion treatment even in this case. If dispersion treatment is performed, cohesion of the polyvalent metal-containing particles (B) may be loosened and the coating liquid is stabilized, while enhancing transparency of the gas barrier laminate obtained by applying the coating liquid. Furthermore, when applying the coating liquid and drying the coating film, cross-linking between the carboxy group-containing polymer and the polyvalent metal ions may easily progress, and a gas barrier laminate having good gas barrier properties may be easily obtained.

The method of dispersion treatment may be a method using a high-speed agitator, homogenizer, ball mill or bead mill. In particular, if a ball mill or a bead mill is used, the mixture can be dispersed with high efficiency, and therefore, a coating liquid in which the dispersion is stable can be obtained in a comparatively short time. In this case, the diameter of each ball or bead is preferred to be small, i.e., preferred to be 0.1 mm to 1 mm.

The polymer solution (I) and the polyvalent metal dispersion liquid (II) prepared as described above are mixed with each other to produce a coating liquid.

The polymer solution (I) is preferred to have a pH in the range of 3 to 7, and more preferably in the range of 4 to 6, at 25°C. The polyvalent metal dispersion liquid (II) is preferred to have a pH in the range of 3 to 7, and more preferably in the range of 4 to 7, at 25°C. Also, the absolute value of the difference between the pH of the polymer solution (I) at 25°C and the pH of the polyvalent metal dispersion liquid (II) at 25°C is preferred to be 4 or less, and more preferred to be 3 or less.

If the polymer solution (I) is mixed with the polyvalent metal dispersion liquid (II) with their pH being set as mentioned above, the carboxy group-containing polymer and the polyvalent metal-containing particles can be uniformly distributed to reduce variation in cross-link density in the coating layer of the gas barrier laminate. Therefore, deterioration in gas barrier properties is less likely to occur, which would otherwise have occurred due to the presence of regions where cross-link density is low.

In the coating liquid, the total concentration of the components other than the organic solvent is preferred to be in the range of 0.1 mass% to 60 mass%, more preferred to be in the range of 0.5 mass% to 25 mass%, and most preferred to be in the range of 1 mass% to 10 mass%, from the perspective of achieving a desired thickness in coating film and obtaining a coating layer with high workability.

As necessary, various additives may be added to the coating liquid. These additives may include other polymers, a thickener, stabilizer, UV absorber, antiblocking agent, softener, inorganic lamellar compound (e.g., montmorillonite), colorant (die or pigment), and the like. Furthermore, other dispersants such as a polyamine may be further added to the coating liquid as a dispersant, in addition to the high molecular weight dispersant (C) with an acidic group.

In the coating liquid obtained in this way, the carboxy group-containing polymer and the polyvalent metal-containing particles are uniformly distributed, and this state can be retained by combining the high molecular weight dispersant with a pH in the predetermined range. In other words, this coating liquid does not cause sedimentation of aggregates immediately after production, and this state can be maintained even after the lapse of a predetermined time after production.

For example, when a first average particle size D1 immediately after production and a second average particle size D2 after the lapse of 8 hours from production under temperature conditions of 25°C are measured, the ratio D2/D1 between the second average particle size D2 and the first average particle size D1 is preferred to be in the range of 0.8 to 1.3. It should be noted that, herein, the average particle size is a value obtained through a dynamic light scattering method.

Accordingly, if this coating liquid is used, gas barrier properties are less likely to be deteriorated due to sedimentation of aggregates in the coating liquid.

### <Gas barrier laminate>

A gas barrier laminate according to an embodiment of the present invention includes a substrate and a gas barrier layer provided on at least one surface of the substrate and is characterized in that the gas barrier layer includes a cured film of the above coating liquid as a coating layer.

### [Substrate]

The substrate of the gas barrier laminate is not particularly limited, but various types of substrates can be used.

The materials forming the substrate are not particularly limited, but various types of materials can be used, including, for example, plastics or paper.

The substrate may have a single layer structure made of one material, or may have a multilayer structure made of multiple materials. The substrate with a multilayer structure may include, for example, a substrate in which a film made of a plastic is laminated on paper.

Of the above materials, the material forming the substrate is preferred to be a plastic, from the perspective that it can be formed into various shapes and can further expand application with gas barrier properties imparted thereto.

Examples of the plastic may include, but are not particularly limited to, polyolefin resins such as polyethylene and polypropylene; polyester resins such as polyethylene terephthalate, polyethylene-2,6-naphthalate, polybutylene terephthalate, and copolymers thereof; polyamide resins such as nylon 6, nylon 66, nylon 12, metaxylylene adipamide, and copolymers thereof; styrene resins such as polystyrene, styrene-butadiene copolymers, and styrene-butadiene-acrylonitrile copolymers; poly(meth)acrylic acid esters; polyacrylonitriles; polyvinyl acetate; ethylene-vinyl acetate copolymers; ethylene-vinyl alcohol copolymers; polycarbonates; polyarylates; regenerated celluloses; polyimides; polyetherimides; polysulfones; polyethersulfones; polyetherketones; and ionomer resins.

In the case of using the gas barrier laminate in food packaging materials, the substrate is preferred to be made of polyethylene, polypropylene, polyethylene terephthalate, nylon 6, or nylon 66.

The plastics for forming the substrate may be used singly or may be used by blending two or more of them with each other.

Additives may be formulated into the plastics. Depending on use, additives can be appropriately selected from known additives such as pigments, antioxidants, antistatic agents, UV absorbers, and lubricants. The additives may be used singly or in combination of two or more.

The form of the substrate is not particularly limited but may be in the form of, for example, a film, sheet, cup, tray, tube, and bottle. Of these forms, films are preferred.

If the substrate is a film, the film may be a stretched film, or may be an unstretched film.

The thickness of the film is not particularly limited but is preferred to be in the range of 1 µm to 200 µm, and more preferred to be in the range of 5 µm to 100 µm, from the perspective of physical strength of the gas barrier laminate to be obtained and processing suitability.

The surface of the substrate may be subjected to plasma treatment, corona treatment, ozone treatment, flame treatment, radical activation treatment with UV or electron beams, or the like, in order that the coating liquid can be applied onto the substrate without being repelled. The treatment method is appropriately selected, depending on the substrate type.

### [Coating layer]

The coating layer is a cured film of the above coating liquid. In other words, the coating layer is formed of the above coating liquid. Specifically, the coating layer is obtained by applying the above coating liquid onto a substrate, and drying the coating film. As described above, the coating layer contains a carboxy group-containing polymer which is ion-crosslinked by polyvalent metal ions, and exhibits good gas barrier properties even in high humidity atmospheres.

The coating layer may be provided to one surface or both surfaces of the substrate.

The coating layer may be directly provided to the surface(s) of the substrate, or may be provided to a surface of one or more other layers (e.g., an anchor layer) formed on the substrate.

Details of the method of forming the coating layer will be described later.

The thickness of the coating layer is preferred to be in the range of 0.01 µm to 100 µm, more preferred to be in the range of 0.1 µm to 10 µm, and even more preferred to be in the range of 0.1 µm to 0.5 µm, from the perspective of formability and handleability of the gas barrier laminate when formed, but it is not particularly limited thereto.

### [Other layers]

As necessary, the gas barrier laminate described above may further include one or more layers other than the substrate and the coating layer.

For example, the gas barrier layer of the gas barrier laminate may be formed of only a coating layer, but may further include one or more layers in addition to the coating layer. For example, a layer formed of an inorganic compound such as aluminum oxide, silicon oxide, or aluminum may be formed on the surface of the substrate using sputtering, ion plating, or the like.

The gas barrier laminate may further include an anchor coat layer interposed between the substrate and the coating layer, for the purposes of enhancing adhesion between the substrate and the coating layer and applying the coating liquid onto the substrate without it being repelled.

The anchor coat layer can be formed using a known anchor coat agent through an ordinarily used method.

Examples of the anchor coat agent may include those which contain a resin such as a polyurethane resin, acrylic resin, melamine resin, polyester resin, phenol resin, amino resin, or fluororesin.

The anchor coat agent may further contain an isocyanate compound in addition to the resin, for the purpose of enhancing adhesion or hot water resistance. The isocyanate compound may need to have one or more isocyanate groups in the molecule, which may be, for example, hexamethylene diisocyanate, xylylene diisocyanate, isophorone diisocyanate, or tolylene diisocyanate.

The anchor coat agent may further contain a liquid medium for dissolving or dispersing the resin or the isocyanate compound.

The thickness of the anchor coat layer is not particularly limited.

As necessary, the gas barrier laminate may further include a second layer laminated via an adhesive or a second layer formed by extruding and laminating an adhesive resin, on the coating layer provided on the substrate or on the surface of the substrate not provided with a coating layer.

The second layer to be laminated may be selected as appropriate according to purposes such as of imparting strength, sealability, easy-to-open properties after being sealed, good appearance, light shielding properties, moisture-proof properties, and the like, to the laminate, and may be made of a material, for example, similar to the plastics mentioned above for the substrate, but it is not limited thereto. Other than these materials, paper, aluminum foil, and the like may be used.

The thickness of the second layer to be laminated is preferred to be in the range of 1 µm to 1,000 µm, more preferred to be in the range of 5 µm to 500 µm, even more preferred to be in the range of 5 µm to 200 µm, and most preferred to be in the range of 5 µm to 150 µm.

The second layer to be laminated may be formed of a single layer or may be formed of two or more layers.

As necessary, the gas barrier laminate may further include a print layer. The print layer may be formed on the coating layer which is provided on the substrate, or may be formed on the surface of the substrate not provided with a coating layer. If the second layer has been laminated, the print layer may be formed on the laminated second layer.

### [Method of producing gas barrier laminate]

The gas barrier laminate can be produced using a method which includes a step of forming a coating layer by applying a coating liquid onto a substrate and drying the coating film. As necessary, this production method may further include the steps of laminating a second layer and forming a print layer before and/or after the step of forming a coating layer.

Examples of the method of applying the coating liquid may include, but are not particularly limited thereto, air knife coating, direct gravure coating, gravure offset, arc gravure coating, reverse roll coating such as top-feed reverse coating, bottom-feed reverse coating or nozzle-feed reverse coating, five-roll coating, lip coating, bar coating, bar reverse coating, and die coating.

Examples of the drying method may include, but are not particularly limited to, a natural drying method, a method using an oven set to a predetermined temperature, and a method using a drying machine, such as an arch dryer, floating dryer, drum dryer, or infrared dryer, attached to a coater.

Drying conditions can be selected as appropriate, depending on the drying method and the like. For example, in the drying method using an oven, the drying temperature is preferred to be in the range of 40°C to 150°C, more preferred to be in the range of 45°C to 150°C, and most preferred to be in the range of 50°C to 140°C. Duration of drying depends on the drying temperature, but is preferred to be in the range of 0.5 sec to 10 min, more preferred to be in the range of 1 sec to 5 min, and most preferred to be in the range of 1 sec to 1 min.

It is assumed that, during or after drying, the carboxy group-containing polymer and the polyvalent metal-containing particles contained in the coating film react with each other to introduce an ion cross-linked structure. In order to sufficiently progress the ion cross-linking reaction, the film after being dried is preferred to be aged for about 1 sec to 10 days in an atmosphere with a relative humidity of 20% or more, and more preferably in the range of 40% to 100%, under temperature conditions of preferably in the range of 5°C to 200°C, and more preferably in the range of 20°C to 150°C.

Since the gas barrier laminate obtained in this way is ion cross-linked, it exhibits high resistance to moisture, water, hot water, and water vapor. Furthermore, such a gas barrier laminate exhibits good gas barrier properties not only under low humidity conditions but also under high humidity conditions. Such a gas barrier laminate is preferred to have an oxygen permeability of 1,000 cm³/(m²·day·MPa) or less, more preferably 500 cm³/(m²·day·MPa) or less, and most preferably 100 cm³/(m²·day·MPa) or less measured under conditions of 30°C and 70% relative humidity according to JIS K-7126 B (equal-pressure method) and the method described in ASTM D3985. The lower the oxygen permeability is, the more preferred it is. The lower limit of the oxygen permeability is usually 0.1 cm³/(m²·day·MPa) or more, but it is not particularly limited thereto.

As described above, the carboxy group-containing polymer and the polyvalent metal-containing particles are uniformly distributed in the coating liquid, and this state can be retained even after the lapse of a predetermined time from production of the coating liquid. Therefore, if this coating liquid is used, the amount of the polyvalent metal-containing particles contained in the coating film is prevented from becoming greatly different between immediately after starting application of the coating liquid and when the remaining amount of the coating liquid has become low after repeated application. Accordingly, gas barrier laminates with insufficient gas barrier properties are prevented from being produced. Thus, if the above coating liquid is used, gas barrier properties are less likely to be deteriorated due to sedimentation of aggregates in the coating liquid.

### <Packaging material, packaging body, and packaged article>

A packaging material according to an embodiment of the present invention includes the gas barrier laminate described above. The packaging material may be used, for example, for producing packaging bodies which are used for wrapping articles.

A packaging body according to an embodiment of the present invention contains the packaging material described above.

The packaging body may be made of the above packaging material, or may contain the above packaging material and include other members. In the case of the former, the packaging body may be, for example, a body shaped into a bag. In the case of the latter, the packaging body may be, for example, a container including a cap made of the above packaging material and a bottomed cylindrical container body.

In the packaging body, the packaging material may be a molded article. As mentioned above, the molded article may be a container such as a bag, or may be a part, such as a cap, of a container. The packaging body or a part thereof may specifically be, for example, a packaging bag, spouted pouch, laminate tube, infusion bag, container cap, or paper container.

There is no particular limitation in usage to which the packaging body is applied. The packaging body can be used for wrapping various articles.

A packaged article according to an embodiment of the present invention includes the packaging body described above and contents therein.

As described above, the gas barrier laminate has good gas barrier properties. Therefore, the packaging material and the packaging body including the gas barrier laminate can be preferably used as a packaging material and a packaging body for articles which are likely to be deteriorated due to oxygen, water vapor, and the like, and can be most preferably used as a food packaging material and a food packaging body. The packaging material and the packaging body can also be preferably used as a packaging material and a packaging body for wrapping chemicals such as pesticides and medicines, medical tools, machine parts, and industrial materials such as precision materials.

When the gas barrier laminate is subjected to heat sterilization treatment such as boiling treatment and retort treatment, gas barrier properties and interlayer adhesion tend not to be deteriorated but tend to be enhanced instead. Accordingly, the packaging material and the packaging body may be a heat sterilizable packaging material and a heat sterilizable packaging body.

The heat sterilizable packaging material and the heat sterilizable packaging body are used for wrapping articles which undergo heat sterilization after being packaged.

The articles which undergo heat sterilization after being packaged may be, for example, food such as curry, stew, soup, sauce, and processed meat.

Heat sterilization treatment may be, for example, boiling treatment and retort treatment.

Boiling treatment is a treatment in which food and the like are moist-heat sterilized for preservation. In boiling treatment, packaged articles, each including contents such as food wrapped with the packaging body, are usually moist-heat sterilized at a temperature of 60°C to 100°C for 10 min to 120 min under atmospheric pressure, although they depend on the contents. Usually, boiling treatment is performed using a hot-water tank. Boiling treatment includes batch treatment in which packaged articles are immersed in constant-temperature hot water in a tank and taken out after the lapse of a given time, and continuous treatment in which packaged articles are passed through a hot water tank tunnel for sterilization.

Retort treatment is a treatment in which microorganisms such as mold, yeast, and bacteria are heat sterilized under pressure for preservation of food or the like in general. In retort treatment, usually, packaged articles, each including food wrapped with the packaging body, are heat sterilized under pressure of 0.15 MPa to 0.3 MPa at a temperature of 105°C to 140°C for 10 min to 120 min. Retort devices include steam devices using heated steam and hot water devices using pressurized superheated water. These devices are used as appropriate according to sterilization conditions of the food or the like to be contained.

### Examples

Specific examples of the present invention will be described below.

### (Example 1)

The carboxy group-containing polymer (A) was heated and dissolved in 2-propanol. As the carboxy group-containing polymer (A), a polyacrylic acid (AC-10LP manufactured by Toagosei Co., Ltd.) having a number average molecular weight of 50,000 was used. Through the above process, a polymer solution (I) containing the carboxy group-containing polymer (A) at a concentration of 10 mass% and having a pH in the range of 4 to 5 at 25°C was prepared. This polymer solution (I) will be termed polymer solution 1 hereinafter.

A high molecular weight dispersant (C) with an acidic group was dissolved in 2-propanol. As the high molecular weight dispersant (C), a polyether phosphate ester (DISPARLON (trademark) DA-375 with a solid content of 100 mass%, manufactured by Kusumoto Chemicals, Ltd.) was used. Next, polyvalent metal-containing particles (B) were added thereto and stirred. As the polyvalent metal-containing particles (B), zinc oxide (FINEX (trademark) -30, manufactured by Sakai Chemical Industry Co., Ltd.) with an average primary particle size of 35 nm was used.

The obtained liquid was subjected to dispersion treatment for 1 hour using a planetary ball mill (P-7 manufactured by Fritsch Co., Ltd.). For this dispersion treatment, zirconium beads with a diameter of 0.2 mm were used. After that, the beads were sieved out of the liquid and pH was controlled using an inorganic acid. Through the above process, a polyvalent metal dispersion liquid (II) containing the polyvalent metal-containing particles (B) at a concentration of 30 mass%, and 10 parts by mass of the high molecular weight dispersant (C) relative to 100 parts by mass of the polyvalent metal-containing particles (B), and having a pH of 4 at 25°C was obtained. This polyvalent metal dispersion liquid (II) will be termed polyvalent metal dispersion liquid 1 hereinafter.

Next, the polymer solution 1, the polyvalent metal dispersion liquid 1, and 2-propanol were mixed with each other and stirred for 15 minutes to prepare a coating liquid 1. In the coating liquid 1, the ratio, i.e., the equivalent ratio, of the product of the mole number and the valence of zinc, to the mole number of the carboxy groups contained in the polyacrylic acid was taken to be 1.0. The coating liquid 1 had a pH of 5.1 at 25°C. Also, the coating liquid 1 had a water content of 50,000 ppm or less in terms of mass fraction.

The coating liquid 1 was left to stand under temperature conditions of 25°C until the lapse of 8 hours after being produced. After that, the coating liquid 1 was applied to one surface of a biaxially stretched polyethylene terephthalate film (Lumirror (trademark) P60 with a thickness of 12 µm, manufactured by Toray Advanced Film Co., Ltd.), using a bar coater (ROD No. 8 with a wet thickness of 20 µm, manufactured by Yasuda Seiki Seisakusho, Ltd.). The coating film was dried in an oven set to 50°C for 1 minute to form a coating layer. In this way, a laminate 1 was obtained.

Next, an unstretched polypropylene film (ZK93-FM with a thickness of 60 µm, manufactured by Toray Advanced Film Co., Ltd.) was dry-laminated onto the coating layer-side surface of the laminate 1 via a two-pack polyurethane-based adhesive (TAKELAC A-525/TAKENATE A-52 manufactured by Mitsui Chemicals, Inc.), and aged at 40°C for 3 days, thereby obtaining a laminate film 1.

### (Example 2)

A polyvalent metal dispersion liquid 2 was prepared as in the method described above for the polyvalent metal dispersion liquid 1, except that a polyether phosphate ester amine (DISPARLON (trademark) DA-325 with a solid content of 100 mass%, manufactured by Kusumoto Chemicals, Ltd.) was used as the high molecular weight dispersant (C) with an acidic group, instead of the polyether phosphate ester (DISPARLON (trademark) DA-375 with a solid content of 100 mass%, manufactured by Kusumoto Chemicals, Ltd.), and the amount of the high molecular weight dispersant (C) relative to 100 parts by mass of the polyvalent metal-containing particles (B) was changed from 10 parts by mass to 15 parts by mass.

Next, a coating liquid 2 was prepared as in the method described above for the coating liquid 1, except that the polyvalent metal dispersion liquid 2 was used instead of the polyvalent metal dispersion liquid 1. The coating liquid 2 had a pH of 4.9 at 25°C.

Next, a laminate 2 was obtained as in the method described above for the laminate 1, except that the coating liquid 2 was used instead of the coating liquid 1. Then, a laminate film 2 was obtained as in the method described above for the laminate film 1, except that the laminate 2 was used instead of the laminate 1.

### (Example 3)

A polyvalent metal dispersion liquid 3 was prepared as in the method described above for the polyvalent metal dispersion liquid 1, except that a polyether phosphate ester amine (DISPARLON (trademark) DA-325 with a solid content of 100 mass%, manufactured by Kusumoto Chemicals, Ltd.) was used as the high molecular weight dispersant (C) with an acidic group, instead of the polyether phosphate ester (DISPARLON (trademark) DA-375 with a solid content of 100 mass%, manufactured by Kusumoto Chemicals, Ltd.).

Next, a coating liquid 3 was prepared as in the method described above for the coating liquid 1, except that the polyvalent metal dispersion liquid 3 was used instead of the polyvalent metal dispersion liquid 1. The coating liquid 3 had a pH of 4.5 at 25°C.

Next, a laminate 3 was obtained as in the method described above for the laminate 1, except that the coating liquid 3 was used instead of the coating liquid 1. Then, a laminate film 3 was obtained as in the method described above for the laminate film 1, except that the laminate 3 was used instead of the laminate 1.

### (Example 4)

A polyvalent metal dispersion liquid 4 was prepared as in the method described above for the polyvalent metal dispersion liquid 1, except that a polyether phosphate ester amine (DISPARLON (trademark) DA-325 with a solid content of 100 mass%, manufactured by Kusumoto Chemicals, Ltd.) was used as the high molecular weight dispersant (C) with an acidic group, instead of the polyether phosphate ester (DISPARLON (trademark) DA-375 with a solid content of 100 mass%, manufactured by Kusumoto Chemicals, Ltd.), and the amount of the high molecular weight dispersant (C) relative to 100 parts by mass of the polyvalent metal-containing particles (B) was changed from 10 parts by mass to 30 parts by mass.

Next, a coating liquid 4 was prepared as in the method described above for the coating liquid 1, except that the polyvalent metal dispersion liquid 4 was used instead of the polyvalent metal dispersion liquid 1. The coating liquid 4 had a pH of 5.2 at 25°C.

Next, a laminate 4 was obtained as in the method described above for the laminate 1, except that the coating liquid 4 was used instead of the coating liquid 1. Then, a laminate film 4 was obtained as in the method described above for the laminate film 1, except that the laminate 4 was used instead of the laminate 1.

### (Example 5: Comparative Example)

A polyvalent metal dispersion liquid 5 was prepared as in the method described above for the polyvalent metal dispersion liquid 1, except that the high molecular weight dispersant (C) was omitted and pH control with an inorganic acid was not performed. Next, a coating liquid 5 was prepared as in the method described above for the coating liquid 1, except that the polyvalent metal dispersion liquid 5 was used instead of the polyvalent metal dispersion liquid 1. The coating liquid 5 caused sedimentation of aggregates immediately after preparation. Accordingly, neither a laminate nor a laminate film was prepared using the coating liquid 5.

### (Example 6: Comparative Example)

A polyvalent metal dispersion liquid 6 was prepared as in the method described above for the polyvalent metal dispersion liquid 1, except that a polyether phosphate ester amine (DISPARLON (trademark) DA-325 with a solid content of 100 mass%, manufactured by Kusumoto Chemicals, Ltd.) was used as the high molecular weight dispersant (C) with an acidic group, instead of the polyether phosphate ester (DISPARLON (trademark) DA-375 with a solid content of 100 mass%, manufactured by Kusumoto Chemicals, Ltd.), the amount of the high molecular weight dispersant (C) relative to 100 parts by mass of the polyvalent metal-containing particles (B) was changed from 10 parts by mass to 15 parts by mass, and pH was controlled to 2.5 instead of 4 with an inorganic acid.

Next, a coating liquid 6 was prepared as in the method described above for the coating liquid 1, except that the polyvalent metal dispersion liquid 6 was used instead of the polyvalent metal dispersion liquid 1. The coating liquid 6 had a pH of 3.1 at 25°C.

The coating liquid 6 caused sedimentation of aggregates immediately after preparation. Accordingly, neither a laminate nor a laminate film was prepared using the coating liquid 6.

### (Example 7: Comparative Example)

A polyvalent metal dispersion liquid 7 was prepared as in the method described above for the polyvalent metal dispersion liquid 1, except that a polyether phosphate ester amine (DISPARLON (trademark) DA-325 with a solid content of 100 mass%, manufactured by Kusumoto Chemicals, Ltd.) was used as the high molecular weight dispersant (C) with an acidic group, instead of the polyether phosphate ester (DISPARLON (trademark) DA-375 with a solid content of 100 mass%, manufactured by Kusumoto Chemicals, Ltd.), the amount of the high molecular weight dispersant (C) relative to 100 parts by mass of the polyvalent metal-containing particles (B) was changed from 10 parts by mass to 15 parts by mass, and pH was not controlled with an inorganic acid.

Next, a coating liquid 6 was prepared as in the method described above for the coating liquid 1, except that the polyvalent metal dispersion liquid 7 was used instead of the polyvalent metal dispersion liquid 1. The coating liquid 7 had a pH of 6.2 at 25°C.

Next, a laminate 7 was obtained as in the method described above for the laminate 1, except that the coating liquid 7 was used instead of the coating liquid 1. Then, a laminate film 7 was obtained as in the method described above for the laminate film 1, except that the laminate 7 was used instead of the laminate 1.

### (Example 8: Comparative Example)

A polyvalent metal dispersion liquid 8 was prepared as in the method described above for the polyvalent metal dispersion liquid 1, except that pH was not controlled with an inorganic acid.

Next, a coating liquid 8 was prepared as in the method described above for the coating liquid 1, except that the polyvalent metal dispersion liquid 8 was used instead of the polyvalent metal dispersion liquid 1. The coating liquid 8 had a pH of 6.4 at 25°C.

Next, a laminate 8 was obtained as in the method described above for the laminate 1, except that the coating liquid 8 was used instead of the coating liquid 1. Then, a laminate film 8 was obtained as in the method described above for the laminate film 1, except that the laminate 8 was used instead of the laminate 1.

### (Example 9)

A polymer solution 9 having a pH in the range of 4 to 5 at 25°C was prepared as in the method described above for the polymer solution 1, except that a polyacrylic acid (AC-10LHP manufactured by Toagosei Co., Ltd.) with a number average molecular weight of 250,000 was used as the carboxy group-containing polymer (A), instead of the polyacrylic acid (AC-10LP manufactured by Toagosei Co., Ltd.) with a number average molecular weight of 50,000.

Next, a coating liquid 9 was prepared as in the method described above for the coating liquid 2, except that the polymer solution 9 was used instead of the polymer solution 1. The coating liquid 9 had a pH of 5.5 at 25°C.

Next, a laminate 9 was obtained as in the method described above for the laminate 1, except that the coating liquid 9 was used instead of the coating liquid 1. Then, a laminate film 9 was obtained as in the method described above for the laminate film 1, except that the laminate 9 was used instead of the laminate 1.

### (Example 10)

A polymer solution 10 having a pH in the range of 4 to 5 at 25°C was prepared as in the method described above for the polymer solution 1, except that a polyacrylic acid (polyacrylic acid 5,000 manufactured by FUJIFILM Wako Pure Chemical Corporation) with a number average molecular weight of 5,000 was used as the carboxy group-containing polymer (A), instead of the polyacrylic acid (AC-10LP manufactured by Toagosei Co., Ltd.) with a number average molecular weight of 50,000.

Next, a coating liquid 10 was prepared as in the method described above for the coating liquid 2, except that the polymer solution 10 was used instead of the polymer solution 1. The coating liquid 10 had a pH of 4.8 at 25°C.

Next, a laminate 10 was obtained as in the method described above for the laminate 1, except that the coating liquid 10 was used instead of the coating liquid 1. Then, a laminate film 10 was obtained as in the method described above for the laminate film 1, except that the laminate 10 was used instead of the laminate 1.

### [Evaluation 1]

### (1) Haze of coating liquid

Haze of the coating liquids immediately after preparation was measured according to JIS K7136: 2000 using NDH2000 manufactured by Nippon Denshoku Industries Co., Ltd. It should be noted that haze was not measured for the coating liquids 6 and 7 because they caused sedimentation immediately after preparation. The results are shown in Tables 1 to 3 below.

### (2) Stability of coating liquid

The coating liquids had been visually observed since immediately after preparation and the stability was evaluated based on the following criteria. The results are shown in Tables 1 to 3 below.

AA: No sedimentation had occurred 1 day after preparation.

A: No sedimentation had occurred 8 hours after preparation, but occurred 1 day after preparation.

B: No sedimentation had occurred 2 hours after preparation, but occurred 4 hours after preparation.

C: Sedimentation occurred immediately after preparation.

### (2) Oxygen permeability of laminate film

A film segment was cut out from each of the laminate films and oxygen permeability thereof was measured through the following procedure.

Specifically, the oxygen permeability of each laminate was measured using an oxygen permeation tester OXTRAN (trademark) 2/20 manufactured by Modern Control Inc., under conditions of 30°C and 70% relative humidity. The measurement method was based on JIS K-7126 B (equal-pressure method) and ASTM D3985, and the measured values were expressed in a unit of cm³/(m²·day·MPa).

Next, two film segments, each with a size of 20 cm × 15 cm, were cut out from each laminate film and these film segments were overlapped with each other so that the unstretched polypropylene film surfaces face each other, in the state of which three sides of the overlapped film segments were sealed to produce a pouch. After injecting 200 mL of water into the pouch, the remaining 1 side was sealed.

The obtained water-filled pouch was subjected to retort treatment at 120°C for 30 minutes using a retort treatment machine (RCS-60 manufactured by Hisaka Works, Ltd.).

After the retort treatment, water was removed, and oxygen permeability of the laminate film was measured as in the procedure described above.

The results are shown in Tables 1 to 3.

**[Table 1]**

| Ex. | Polymer solution | | Polyvalent metal dispersion liquid | | | Coating liquid | | | Laminate film | |
|---|---|---|---|---|---|---|---|---|---|---|
| | Number average molecular weight | pH | Dispersant | | pH after control | pH | Haze [%] | Stability | Oxygen permeability [cm³/(m²·day·MPa)] | |
| | | | Type | Amount [Mass part(s)] | | | | | Before retorting | After retorting |
| 1 | 50,000 | 4-5 | DA-375 | 10 | 4 | 5.1 | 3.0 | AA | 1.6 | ≤1 |
| 2 | 50,000 | 4-5 | DA-325 | 15 | 4 | 4.9 | 2.5 | AA | 6.3 | ≤1 |
| 3 | 50,000 | 4-5 | DA-325 | 10 | 4 | 4.5 | 3.8 | AA | 2.3 | ≤1 |
| 4 | 50,000 | 4-5 | DA-325 | 30 | 4 | 5.2 | 3.5 | AA | 2.8 | ≤1 |

**[Table 2]**

| Ex. (Comp. Ex.) | Polymer solution | | Polyvalent metal dispersion liquid | | | Coating liquid | | | Laminate film | |
|---|---|---|---|---|---|---|---|---|---|---|
| | Number average molecular weight | pH | Dispersant | | pH after control | pH | Haze [%] | Stability | Oxygen permeability [cm³/(m²·day·MPa)] | |
| | | | Type | Amount [Mass part(s)] | | | | | Before retorting | After retorting |
| 5 | 50,000 | 4-5 | - | - | No control | | - | C | - | - |
| 6 | 50,000 | 4-5 | DA-325 | 15 | 2.5 | 3.1 | - | C | - | - |
| 7 | 50,000 | 4-5 | DA-325 | 15 | No control | 6.2 | 6.8 | B | 10.4 | 56.6 |
| 8 | 50,000 | 4-5 | DA-375 | 10 | No control | 6.4 | 3.2 | B | 1.9 | 1.9 |

**[Table 3]**

| Ex. | Polymer solution | | Polyvalent metal dispersion liquid | | | Coating liquid | | | Laminate film | |
|---|---|---|---|---|---|---|---|---|---|---|
| | Number average molecular weight | pH | Dispersant | | pH after control | pH | Haze [%] | Stability | Oxygen permeability [cm³/(m²·day·MPa)] | |
| | | | Type | Amount [Mass part(s)] | | | | | Before retorting | After retorting |
| 9 | 250,000 | 4-5 | DA-375 | 10 | 4 | 5.5 | 5.2 | A | 2.1 | ≤1 |
| 10 | 5,000 | 4-5 | DA-375 | 10 | 4 | 4.8 | 4.2 | AA | 2.8 | ≤1 |

As shown in Tables 1 to 3, the coating liquids 1 to 4, 9 and 10 had good stability compared to the coating liquids 5 to 8. It should be noted that, if a material with no acidic group is used as a high molecular weight dispersant, stability of the coating liquid becomes comparable to Examples 5 and 6.

Also, the laminate films 1 to 4, 9 and 10 obtained using the coating liquids 1 to 4, 9 and 10 had low oxygen permeability and exhibited good gas barrier properties after retort treatment, compared to the laminate films 7 and 8 obtained using the coating liquids 7 and 8.

### [Evaluation 2]

For the coating liquid 2, the first average particle size D1 immediately after preparation was measured. Then, the liquid was left to sand under temperature conditions of 25°C for 8 hours, and the second average particle size D2 was measured. These average particle sizes were measured using a Nanotrac UPA-EX150 manufactured by MicrotracBEL Corp. As a result of the measurements, the ratio D2/D1 between the second average particle size D2 and the first average particle size D1 was 0.9.

Measurements similar to these were performed for the coating liquid 7. As a result of the measurement, the ratio D2/D1 between the second average particle size D2 and the first average particle size D1 was 4.8.

Furthermore, measurements similar to the above were also performed for the coating liquid 9. As a result of the measurements, the ratio D2/D1 between the second average particle size D2 and the first average particle size D1 was 1.2.

In this way, the coating liquids which were visually evaluated to have good stability were less likely to produce aggregates even after being left for a long period of time, compared to the coating liquids which were visually evaluated to have insufficient stability.

## Claims

1. A coating liquid for producing a gas barrier laminate, the coating liquid comprising a carboxy group-containing polymer (A), polyvalent metal-containing particles (B), a high molecular weight dispersant (C) with an acidic group, and an organic solvent (D), the coating liquid having a pH in a range of 4 to 6 at 25°C.

2. The coating liquid according to claim 1, wherein the polyvalent metal-containing particles (B) contain polyvalent metal that is bivalent metal.

3. The coating liquid according to claim 1 or 2, wherein the polyvalent metal-containing particles (B) contain zinc oxide.

4. The coating liquid according to any one of claims 1 to 3, wherein the high molecular weight dispersant (C) contains a polyether phosphate ester.

5. The coating liquid according to any one of claims 1 to 4, wherein, when an amount of the polyvalent metal-containing particles (B) is 100 parts by mass, an amount of the high molecular weight dispersant (C) is in a range of 1 part by mass to 30 parts by mass.

6. The coating liquid according to any one of claims 1 to 5, wherein the carboxy group-containing polymer (A) has a number average molecular weight in a range of 5,000 to 50,000.

7. The coating liquid according to any one of claims 1 to 6, wherein the coating liquid has a water content of 50,000 ppm or less in terms of mass fraction.

8. The coating liquid according to any one of claims 1 to 7, wherein a ratio of a product of a mole number (Bt) and a valence of the polyvalent metal contained in the polyvalent metal-containing particles (B), to a mole number (At) of carboxy groups contained in the carboxy group-containing polymer (A) is 0.6 or more.

9. The coating liquid according to any one of claims 1 to 8, wherein, when a first average particle size D1 immediately after production and a second average particle size D2 after the lapse of 8 hours from production under temperature conditions of 25°C are measured, a ratio D2/D1 between the second average particle size D2 and the first average particle size D1 is in a range of 0.8 to 1.3.

10. A gas barrier laminate comprising a cured film of the coating liquid according to any one of claims 1 to 9 as a coating layer.

11. The gas barrier laminate according to claim 10, wherein the laminate has a thickness in a range of 0.01 µm to 100 µm and an oxygen permeability of 1,000 cm³/(m²·day·MPa) or less measured under conditions of 30°C and 70% relative humidity.

12. A packaging material comprising the gas barrier laminate according to claim 10 or 11.

13. A packaging body containing the packaging material according to claim 12.

14. A packaged article including
the packaging body according to claim 13; and
contents accommodated in the packaging body.

15. A method of producing a coating liquid for producing a gas barrier laminate, comprising
mixing a polymer solution (I) with a polyvalent metal dispersion liquid (II) to obtain a mixture having a pH in a range of 4 to 6 at 25°C, wherein
the polymer solution (I) contains a carboxy group-containing polymer (A) and an organic solvent (D); and
the polyvalent metal dispersion liquid (II) contains polyvalent metal-containing particles (B), a high molecular weight dispersant (C) with an acidic group, and an organic solvent (D).

16. The production method according to claim 15, wherein the polymer solution (I) has a pH in a range of 3 to 7 at 25°C, and the polyvalent metal dispersion liquid (II) has a pH in a range of 3 to 7 at 25°C.

17. A method of producing a gas barrier laminate, comprising producing the coating liquid through the method according to claim 15 or 16, and forming a coating layer from the coating liquid.

18. A method of producing a gas barrier laminate, comprising forming a coating layer from the coating liquid according to any one of claims 1 to 9.
